# EUROPÄISCHE PATENTSCHRIFT

(11) **EP 1 129 768 B1**
(45) Veröffentlichungstag und Bekanntmachung des Hinweises auf die Patenterteilung: **04.05.2005**
(21) Anmeldenummer: 00125411.9
(22) Anmeldetag: 20.11.2000
(51) Int. Cl.: B01F 3/04, C02F 3/20

(54) **Begasungseinrichtung**
Aeration device
Dispositif d'aération

(30) Priorität: 23.02.2000 DE 10008449
(43) Veröffentlichungstag der Anmeldung: 05.09.2001
(73) Patentinhaber: Ott, Rita, 30855 Langenhagen (DE)
(72) Erfinder: Wilfried Ott, D-30855 Langenhagen (DE)
(74) Vertreter: Patentanwälte Thömen & Körner

(56) Entgegenhaltungen:
- DE-A- 3 819 305
- DE-A- 4 223 942
- DE-A- 19 722 781
- DE-B- 2 701 656

## Beschreibung

Die Erfindung betrifft eine Begasungseinrichtung nach dem Oberbegriff des Anspruchs 1.

Eine gattungsgemäße Begasungseinrichtung ist aus der DE-PS 38 19 305 bekannt. Ein Einleitungskörper dieser Begasungseinrichtung besteht aus einem Kunststoff und die Membran aus einem Elastomer. Die Membran weist sowohl Bereiche mit Perforationsschlitzen auf, durch die Gas in das zu behandelnde Abwasser übertreten kann, also auch Bereiche ohne Perforationsschlitze, z. B. unmittelbar an einer Gasverteilungsnut, um dort einen unmittelbaren und zu konzentrierten Gasaustritt zu verhindern.

Der grundsätzliche Aufbau dieser bekannten Begasungseinrichtung hat sich bewährt. Bei der Werkstoffauswahl für die Membran sind in letzter Zeit erhebliche Fortschritte dahingehend gelungen, Anlagerungen von Schleim und Verkrustungen durch organische und anorganische Inhaltsstoffe sowie Weichmacherverluste zu reduzieren. Die mit diesem Fortschritt an sich mögliche längere Standzeit wird allerdings dadurch wieder begrenzt, dass nun mechanische Schäden an der Membran durch Risse entstanden, die bisher wegen des sonst früher fälligen Austausches der Membran nicht aufgetreten waren.

Ferner ist aus der DE-B1-27 01 656 eine Einrichtung zur intermittierenden Belüftung von Abwasser bekannt, die einen Rohrmantel mit einer Luftverteilerfolie umfasst. Abstandsleisten zwischen dem Rohrmantel und der Luftverteilerfolie begrenzen einen Raum, in welchen die Luft mit geringem Widerstand eintreten und sich der Länge nach verteilen kann.

Der Erfindung liegt die Aufgabe zugrunde, bei einer Begasungseinrichtung der eingangs genannten Art die Standzeit der Membran durch Reduzierung der Rissneigung weiter zu verlängern.

Diese Aufgabe wird bei einer Begasungseinrichtung nach dem Oberbegriff des Anspruchs 1 durch die im kennzeichnenden Teil angegebenen Merkmale gelöst.

Weiterbildungen und vorteilhafte Ausgestaltungen ergeben sich aus den Unteransprüchen.

Der erfindungsgemäßen Lösung musste zuerst eine umfangreiche Ursachenforschung vorausgehen, die dadurch erschwert wurde, dass eine Begasungseinrichtung im praktischen Betrieb nicht überwacht werden kann. Dabei wurde folgendes ermittelt:

Eine Rissbildung tritt besonders dann auf, wenn die Begasungseinrichtung nicht kontinuierlich, sondern intermittierend betrieben wird. Grund für eine intermittierende Gaseinleitung ist das Behandlungskonzept in Kläranlagen für manche Art von Abwässern. Es beruht darauf, dass zunächst die Fähigkeit von Bakterien, vornehmlich Aerobiern ausgenutzt wird, organische Substanzen zu veratmen, d.h. sie in niedermolekulare Verbindungen, letztlich in Kohlendioxid, Wasser, Nitrate und Sulfate zu überführen. Voraussetzung dafür im aerob arbeitenden System ist eine ausreichende Belüftung des Belebtschlammes im Abwasser. Anschließend wird die Belüftung ausgesetzt und die biologische Abwasserreinigung mit Anaerobiern, d.h. Bakterien, die vom chemisch gebundenen Sauerstoff leben und somit reduktiv abbauen, gewinnt an Bedeutung.

Durch intermittierenden Betrieb kommt es in Pausen, in denen kein Gas ins Abwasser eingeleitet wird und die Membran dann nicht mehr durch ein Gaspolster zwischen ihrer Innenseite und der Außenseite des Einleitungskörpers aufgebläht wird, zur Faltenbildung der Membran im oberen Bereich. Dafür wurden in der Ursachenforschung folgende Gründe ermittelt:

Bei Abschalten der Belüftung bewirkt der hydrostatische Druck im Abwasser des Klärbeckens, dass die Membran an den Einleitungskörper angedrückt wird. Da dies aber nicht immer gleichmäßig geschieht, kann es zu einer unkontrollierten Faltenbildung kommen, die in den Bereich der Perforationsschlitze läuft, und dann dort allmählich zu der Materialermüdung führt.

Der Bereich der Membran mit den Perforationsschlitzen ist nämlich etwas weniger steif als der übrige unperforierte Bereich und somit setzt die unkontrollierte Faltenbildung bevorzugt im perforierten Bereich ein oder setzt sich dahin fort. Wenn dort erst einmal eine Falte entstanden ist, bildet sie sich immer wieder an derselben Stelle aus. Nun stellen die Perforationsschlitze aber bereits eine Schwächung des Materials dar und begünstigen das Einreißen der Membran bei fortschreitender Materialermüdung.

Der beschriebene Effekt der Faltenbildung wird noch dann begünstigt, wenn die Membran "Übergröße" besitzt, nämlich ihr Umfang im entspannten Zustand größer als der Umfang des Einleitungskörpers ist. Dies ist in der Praxis häufig der Fall, denn eine bereits bei der Fertigung vorhandene Übergröße erleichtert die Montage, da die Membran sich ohne Widerstand über den Einleitungskörper streifen lässt. Darüber hinaus tritt im Betrieb mit der Zeit durch die Druckbeaufschlagung von innen eine bleibende Dehnung der Membran ein.

Bei der erfindungsgemäßen Begasungseinrichtung wird eine unkontrollierte Faltenbildung vermieden, in dem eine kontrollierte Faltenbildung erzwungen wird. Dabei wird die kontrollierte Faltenbildung in einem Bereich der Membran vorgenommen, der frei von Perforationsschlitzen und dadurch nicht bereits geschwächt ist. Ist dann erst einmal eine Falte entstanden, kann sich das wegen der Übergröße vorhandene "überschüssige" Material des Umfangs der Membran in dieser Falte stauen, so dass kein Anlass für eine weitere Faltenbildung an unerwünschter Stelle entsteht. Daher können sich die übrigen Bereiche der Membran, insbesondere die Bereiche mit den Perforationsschlitzen, bei Abschalten der Gaszufuhr unter der Wirkung des hydrostatischen Druckes im Abwasser glatt an den Einleitungskörper anlegen. Sie werden also nicht auf Knick beansprucht.

Die Anordnung der faltenbildenden Mittel in einem - bezogen auf die Einbaulage - oben liegen Bereich nutzt die bereits vorhanden Tendenz zur unkontrollierten Faltenbildung in der oberen Hälfte der Begasungseinrichtung aus. Dabei spielt der Umstand eine Rolle, dass der hydrostatische Druck im unteren Bereich geringfügig größer als im oberen Bereich ist und daher die Membran sich nach Abschalten der Gaszufuhr zuerst unten an den Einleitungskörper anlegt und dann nach und nach weiter oben.

Ohne die erfindungsgemäßen Mittel würde dies allerdings nicht exakt gleichmäßig ablaufen, da auch Strömungen im Abwasser eine Rolle spiele und daraus resultierende Kräfte dem hydrostatischen Druck überlagert sind. Es könnten sich dann auch unterhalb des Kamms, also der höchstgelegenen Linie der Membran Falten bilden, was ja in der Praxis auch nachgewiesen wurde.

Gemäß einer Weiterbildung können die Mittel durch einen Längsbereich der Membran mit einem eingeprägten Krümmungsradius gebildet sein, der kleiner als der mittlere Krümmungsradius der Membran im auf dem Einleitungskörper montierten Zustand bemessen ist.

Die bei Abschalten der Gaszufuhr auf die Membran radial einwirkenden hydrostatischen Kräfte unterstützen dann die bereits vorgegebene Neigung des stärker gekrümmten Bereichs der Membran zur Faltenbildung.

Alternativ können die Mittel auch durch einen Längssteg gebildet sein, der über den Umriss der Mantelfläche des Einleitungskörpers vorsteht.

Der Vorteil dieser Ausführung besteht darin, auf eine spezielle Vorverformung der Membran verzichten zu können. Da auch hier die Membran beim Zusammenziehen an einer Stelle zuerst mehr gekrümmt wird, als in den übrigen Bereichen, wird anschließend die gleiche Wirkung der auf die Membran radial einwirkenden hydrostatischen Kräfte ausgenutzt, die auch bei der vorverformten Membran zur Faltenbildung an der gewollten Stelle führt.

Bei der Ausgestaltung und Anordnung des Längsstegs sind mehrere Varianten möglich. So kann der Längssteg integraler Bestandteil des Einleitungskörpers sein.

Dies erfordert eine Änderung des Herstellungswerkzeugs gegenüber der konventionellen Ausführung. Bei der anschließenden Fertigung fallen dann aber keine relevanten Mehrkosten an, da die Montage der Membran auf dem Einleitungskörper unverändert erfolgen kann.

Weiterhin kann der Längssteg ein gesondertes Bauteil sein, das zwischen die Membran und den Einleitungskörper einsetzbar ist.

Bei dieser Ausführung kann auf die Änderung des Herstellungswerkzeugs verzichtet werden. Allerdings ist bei der Montage ein zusätzlicher Arbeitsschritt nötig. Auch kann es erforderlich sein, den Längssteg am Einleitungskörper fixieren zu müssen.

Eine weitere Ausführung sieht vor dass der Längssteg an der nach innen weisenden Seite der Membran befestigt ist. Zwar kann auch hier auf die Änderung des Herstellungswerkzeugs für den Einleitungskörper verzichtet werden, dennoch ist ein zusätzlicher Arbeitsschritt nötig.

Auch kann der Längssteg an der nach innen weisenden Seite der Membran angeordnet und deren integraler Bestandteil sein.

Bei dieser Ausführung ist eine Änderung des Werkzeugs für die Fertigung der Membran nötig. Ansonsten fallen bei der anschließenden Montage dann aber keine relevanten Mehrkosten an.

Bei einer weiteren Alternative können die Mittel durch einen Längsbereich der Membran mit einem eingeprägten Krümmungsradius gebildet sein, der eine bezogen auf den Einleitungskörper nach innen gerichtete Wölbung darbietet.

Dabei kann der Krümmungsradius kleiner als der mittlere Krümmungsradius der Membran im auf dem Einleitungskörper montierten Zustand bemessen sein.

Bei Abschalten der Gaszufuhr erzeugen die auf die Membran radial einwirkenden hydrostatischen Kräfte eine Faltenbildung im vorbehandelten Längsbereich der Membran. Dabei nimmt der Krümmungradius im Zentrum dieses Längsbereichs zu, während die seitlich angrenzenden Bereiche ebenfalls Falten bilden, allerdings mit gegensätzlich gerichteter Wölbung.

Schließlich kann im Einleitungskörper im Bereich der Längszone der Membran eine Längsnut angeordnet sein.

Die Längsnut ermöglicht ein Ausweichen des unter Einfluß des hydrostatischen Druckes zunehmenden Kammes der Längszone nach Innen bezogen auf den Einleitungskörper.

Nachfolgend wird die Erfindung anhand der Zeichnung erläutert.

In der Zeichnung zeigen:
- Fig. 1 a - c: einen Querschnitt durch eine Begasungseinrichtung mit vorgeformter Membran einer nach Außen gerichteten Wölbung in drei Zusammenziehungs-Phasen,
- Fig. 2 a - c: einen Querschnitt durch eine Begasungseinrichtung mit Steg in drei Zusammenziehungs-Phasen,
- Fig. 3 a - c: einen Querschnitt durch eine Begasungseinrichtung mit vorgeformter Membran einer nach Innen gerichteten Wölbung in drei Zusammenziehungs-Phasen und
- Fig. 4 a - c: einen Querschnitt durch eine Begasungseinrichtung nach Fig. 3 zusätzlich mit einer Längsnut im Einleitungskörper in drei Zusammenziehungs-Phasen.

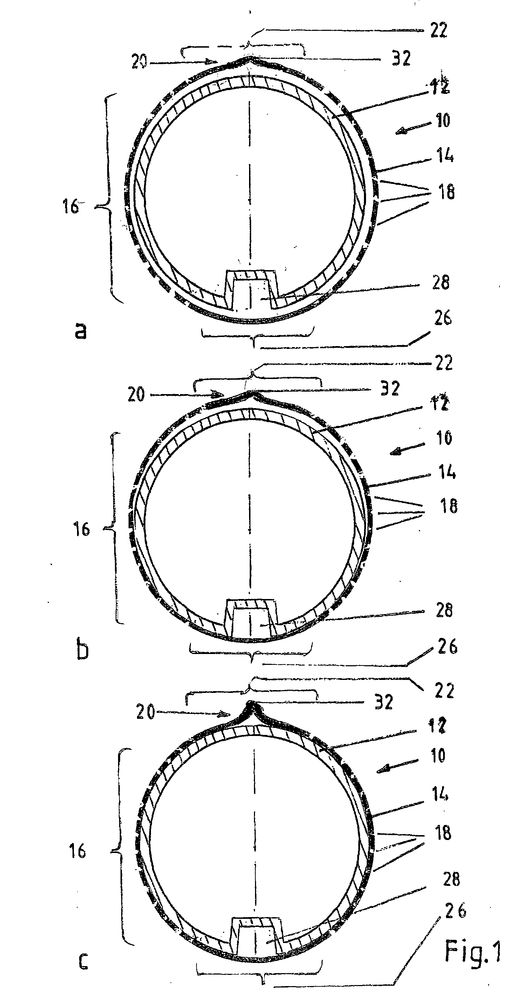

In den Figuren 1 bis 4 sind Querschnitte durch eine Begasungseinrichtung 10 dargestellt. Die Begasungseinrichtung 10 besteht aus einem Einleitungskörpers 12 und einer diesen umgebenden Membran 14. Die Membran 14 weist Bereiche 16 mit Perforationsschlitzen 18 zur Einleitung eines Gases in die Flüssigkeit auf und weitere Bereiche 22, 26, in denen keine Perforationsschlitze vorhanden sind. Der Bereich 26 deckt eine axial verlaufenden Nut 28 im Einleitungskörper 12 ab, die zur Längsverteilung des einzuleitenden Gases dient. Der Grund für die hier fehlenden Perforationsschlitze besteht darin, einen unmittelbaren Austritt des über die Nut 28 zugeführten Gases durch die abdeckende Membran 14 im Nut-Bereich zu verhindern. Vielmehr soll sich eine Überdruck aufbauen, der die Membran 14 unter Bildung eines Ringraums für eine umlaufende Gasverteilung vom Einleitungskörper 12 abhebt und dadurch einen Zugang des Gases zu allen Perforationsschlitzen 18 und damit einen Austritt über einer größeren Fläche ermöglicht.

Während die Nut 28 und der sie abdeckende Bereich 26 der Membran 14 ohne Perforationsschlitze - bezogen auf die Einbaulage der Begasungseinrichtung 10 - unten liegen, befindet sich ein weiterer Bereich 22 ebenfalls ohne Perforationsschlitze gegenüber, also - bezogen auf die Einbaulage - oben.

Hier sind Mittel 20 vorhanden, welche bei abgeschalteter Gaszufuhr und anstehendem hydrostatischen Druck des Abwassers eine Axialfalte der Membran 14 in diesem oben liegenden Bereich 22 erzwingen.

Bei den Darstellungen nach Fig. 1 sind diese Mittel 20 durch eine Längszone 32 der Membran 14 mit einem eingeprägten Krümmungsradius gebildet, der kleiner als der mittlere Krümmungsradius der Membran 14 im auf dem Einleitungskörper 12 montierten Zustand bemessen ist und nach außen weist.

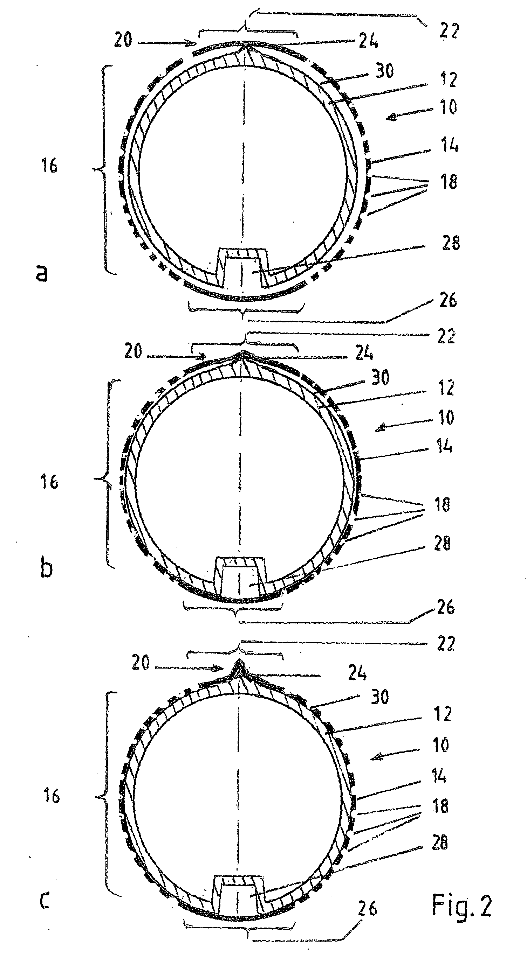

Bei den Darstellungen nach Fig. 2 sind die Mittel 20 durch einen Längssteg 24 gebildet, der über den Umriss 30 der Mantelfläche des Einleitungskörpers 12 vorsteht.

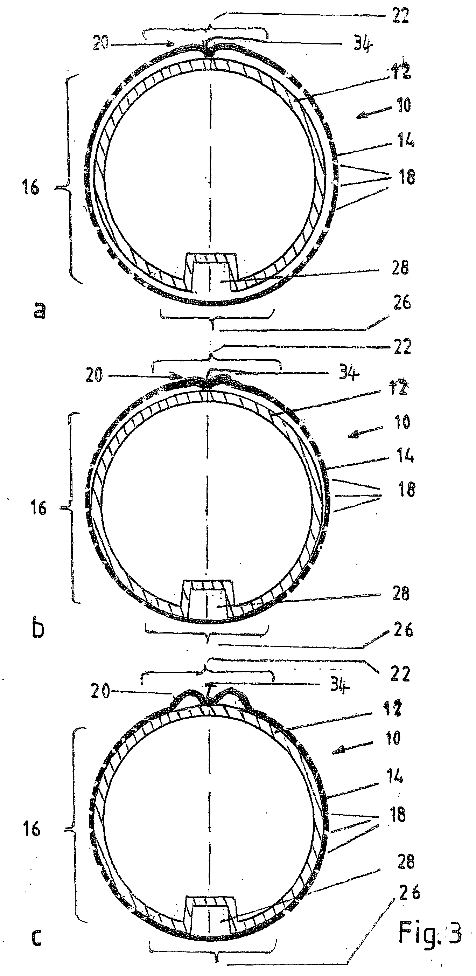

Die Darstellung nach Fig. 3 zeigen eine Längszone 34 der Membran 14, bei der ein eingeprägter Krümmungsradius gebildet wird, der eine bezogen auf den Einleitungskörper nach innen gerichtete Wölbung darbietet. Da hier der erzeugte Kamm aber nicht ausweichen kann, bilden sich zusätzlich Falten im seitlich angrenzenden Bereich, allerdings mit gegensätzlich gerichteter Wölbung. Der überschüssige Umfang der Membran wird hier auf drei Falten verteilt.

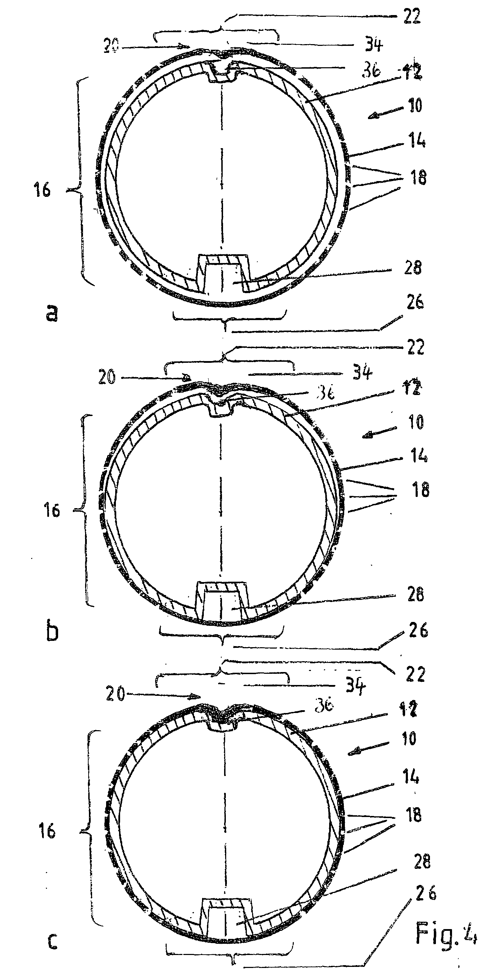

Die Darstellung nach Fig. 4 geht aus von einer Membran 14, wie sie auch in Fig. 3 dargestellt ist. Zusätzlich umfaßt die Auführung nach Fig. 4 eine Längsnut 36 im Bereich der Längszone 34 der Membran 14. In diese Längsnut 36 kann der sich ausprägende Kamm unter Einfluß des hydrostatischen Druckes nach innen ausweichen.

Die Längszone 32 mit nach außen gerichteter Wölbung, der Längssteg 24 sowie Längszone 34 mit nach außen gerichteter Wölbung, gegebenenfalls in Kombination mit der Längsnut 36 bewirken, dass sich die zuerst unter dem Überdruck gedehnte und bei anschließendem Abschalten der Gaszufuhr zusammenziehende Membran 14 auf dem tendenziellen Kamm zuerst etwas stärker krümmt als an anderen Stellen. Diese Erscheinung begünstigt dann die Faltenbildung an dieser Stelle, welche durch den stärker werdenden Anteil des hydrostatischen Drucks schließlich zu einer einzigen ausgeprägten Falte führt.

Die Teile a, b und c der Figuren 1 bis 4 zeigen einzelne Zusammenziehungs-Phasen. In Teil a ist der noch nahezu gedehnten Zustand dargestellt, bei dem sich aber bereits eine Faltenbildung im Kamm des oberen Bereichs 22 der Membran 14 andeutet.

Teil b zeigt einen Übergangszustand, in dem die Ausprägung der Falte erzwungen wird und Teil c schließlich den Endzustand, bei dem das "überschüssige" Umfangsmaterial der Membran 14 in der Falte gespeichert ist, während alle übrigen Bereiche unmittelbar am Einleitungskörper anliegen.

## Patentansprüche

1. Begasungseinrichtung (10) zum Einbringen eines Gases in eine Flüssigkeit mit mindestens einem Einleitungskörper (12), der eine axial verlaufenden Nut (28) zur Längsverteilung des einzuleitenden Gases und eine Membran (14) aus einem elastischen Werkstoff umfasst, in dem Bereiche (16) mit Perforationsschlitzen (18) zur Einleitung des Gases in die Flüssigkeit vorhanden sind, **dadurch gekennzeichnet, dass** die Begasungseinrichtung (10) in einem der axial verlaufenden Nut (28) gegenüber liegen Bereich (22) angeordnete Mittel (20) umfasst, welche bei abgeschalteter Gaszufuhr und anstehendem hydrostatischen Druck der Flüssigkeit eine Axialfalte der Membran (14) in diesem der axial verlaufenden Nut (28) gegenüber liegenden Bereich (22) erzwingen, der gleichzeitig frei von Perforationsschlitzen ist.

2. Begasungseinrichtung (10) nach Anspruch 1, **dadurch gekennzeichnet, dass** die Mittel (20) durch eine Längszone (32) der Membran (14) mit einem eingeprägten Krümmungsradius gebildet sind, der kleiner als der mittlere Krümmungsradius der Membran (14) im auf dem Einleitungskörper (12) montierten Zustand bemessen ist und eine bezogen auf den Einleitungskörper nach außen gerichtete Wölbung darbietet.

3. Begasungseinrichtung (10) nach Anspruch 1, **dadurch gekennzeichnet, dass** die Mittel (20) durch einen Längssteg (24) gebildet sind, der über den Umriss (30) der Mantelfläche des Einleitungskörpers (12) vorsteht.

4. Begasungseinrichtung (10) nach Anspruch 3, **dadurch gekennzeichnet, dass** der Längssteg (24) integraler Bestandteil des Einleitungskörpers (12) ist.

5. Begasungseinrichtung (10) nach Anspruch 3, **dadurch gekennzeichnet, dass** der Längssteg (24) ein gesondertes Bauteil ist, das zwischen die Membran (14) und den Einleitungskörper (12) einsetzbar ist.

6. Begasungseinrichtung (10) nach Anspruch 3, **dadurch gekennzeichnet, dass** der Längssteg (24) an der nach innen weisenden Seite der Membran (14) befestigt ist.

7. Begasungseinrichtung (10) nach Anspruch 3, **dadurch gekennzeichnet, dass** der Längssteg (24) an der nach innen weisenden Seite der Membran (14) angeordnet und deren integraler Bestandteil ist.

8. Begasungseinrichtung (10) nach Anspruch 1, **dadurch gekennzeichnet, dass** die Mittel (20) durch eine Längszone (34) der Membran (14) mit einem eingeprägten Krümmungsradius gebildet sind, der eine bezogen auf den Einleitungskörper nach innen gerichtete Wölbung darbietet.

9. Begasungseinrichtung (10) nach Anspruch 8, **dadurch gekennzeichnet, dass** der Krümmungsradius kleiner als der mittlere Krümmungsradius der Membran (14) im auf dem Einleitungskörper (12) montierten Zustand bemessen ist.

10. Begasungseinrichtung (10) nach Anspruch 8 oder 9, **dadurch gekennzeichnet, dass** im Einleitungskörper (12) im Bereich der Längszone (34) der Membran (14) eine Längsnut (36) angeordnet ist.

## Claims

1. Gassing device (10) for introducing a gas into a liquid with at least one introduction body (12), which has an axially directed groove (28) for the longitudinal distribution of the gas to be introduced and a membrane (14) made from an elastic material in which there are areas (16) with perforation slits (18) for introducing the gas into the liquid, **characterized in that** the gassing device (10) comprises means (20) located in an area (22) facing the axially directed groove (28) and which when the gas supply is disconnected and in the presence of the hydrostatic pressure of the liquid force an axial fold of the membrane (14) in said area (22) facing the axially directed groove (28) and which is simultaneously free from perforation slits.

2. Gassing device (10) according to claim 1, **characterized in that** the means (20) are formed by a longitudinal zone (32) of the membrane (14) with an imposed radius of curvature, which is smaller than the mean radius of curvature of the membrane (14) in the state mounted on the introduction body (12) and offers an outwardly directed curvature with respect to the introduction body.

3. Gassing device (10) according to claim 1, **characterized in that** the means (20) are formed by a longitudinal web (24), which projects over the outline (30) of the circumferential surface of the introduction body (12).

4. Gassing device (10) according to claim 3, **characterized in that** the longitudinal web (24) is an integral component of the introduction body (12).

5. Gassing device (10) according to claim 3, **characterized in that** the longitudinal web (24) is a separate component insertable between the membrane (14) and the introduction body (12).

6. Gassing device (10) according to claim 3, **characterized in that** the longitudinal web (24) is fixed to the inwardly directed side of the membrane (14).

7. Gassing device (10) according to claim 3, **characterized in that** the longitudinal web (24) is located on the inwardly directed side of the membrane (14) and is an integral component thereof.

8. Gassing device (10) according to claim 1, **characterized in that** the means (20) are formed by a longitudinal zone (34) of the membrane (14) with an imposed radius of curvature, which offers an inwardly directed curvature relative to the introduction body.

9. Gassing device (10) according to claim 8, **characterized in that** the radius of curvature is smaller than the mean radius of curvature of the membrane (14) in the state fitted to the introduction body (12).

10. Gassing device (10) according to claim 8 or 9, **characterized in that** there is a longitudinal groove (36) in the introduction body (12) in the vicinity of the longitudinal zone (34) of the membrane (14).

## Revendications

1. Dispositif de gazage (10) servant à introduire un gaz dans un liquide avec au moins un corps d'introduction (12), qui comprend une rainure (28) s'étendant axialement pour la répartition longitudinale du gaz à introduire, et une membrane (14) en une matière élastique comprenant des zones (16) avec des fentes de perforation (18) pour l'introduction du gaz dans le liquide, **caractérisé en ce que** le dispositif de gazage (10) comprend des moyens (20) disposés dans une zone (22) opposée à la rainure (28) s'étendant axialement, qui, lorsque l'alimentation en gaz est coupée et la pression hydrostatique du liquide en place, forcent la formation d'un pli axial de la membrane (14) dans cette zone (22) opposée à la rainure axiale (28), qui est en même temps exempte de fentes de perforation.

2. Dispositif de gazage (10) selon la revendication 1, **caractérisé en ce que** les moyens (20) sont formés par une zone longitudinale (32) de la membrane (14) avec un rayon de courbure marqué qui est dimensionné plus petit que le rayon de courbure moyen de la membrane (14) en état monté sur le corps d'introduction (12) et qui présente une convexité tournée vers l'extérieur, vue par rapport au corps d'introduction.

3. Dispositif de gazage (10) selon la revendication 1, **caractérisé en ce que** les moyens (20) sont formés par une nervure longitudinale (24) qui fait saillie au-delà du contour (30) de la surface latérale du corps d'introduction (12).

4. Dispositif de gazage (10) selon la revendication 3, **caractérisé en ce que** la nervure longitudinale (24) est une partie intégrante du corps d'introduction (12).

5. Dispositif de gazage (10) selon la revendication 3, **caractérisé en ce que** la nervure longitudinale (24) est un composant séparé qui peut être inséré entre la membrane (14) et le corps d'introduction (12).

6. Dispositif de gazage (10) selon la revendication 3, **caractérisé en ce que** la nervure longitudinale (24) est fixée sur la face tournée vers l'intérieur de la membrane (14).

7. Dispositif de gazage (10) selon la revendication 3, **caractérisé en ce que** la nervure longitudinale (24) est disposée sur la face tournée vers l'intérieur de la membrane (14) et qu'elle fait partie intégrante de celle-ci.

8. Dispositif de gazage (10) selon la revendication 1, **caractérisé en ce que** les moyens (20) sont formés par une zone longitudinale (34) de la membrane (14) avec un rayon de courbure empreint, qui présente une convexité tournée vers l'intérieur, vue par rapport au corps d'introduction.

9. Dispositif de gazage (10) selon la revendication 8, **caractérisé en ce que** le rayon de courbure est dimensionné plus petit que le rayon de courbure moyen de la membrane (14) en état monté sur le corps d'introduction (12).

10. Dispositif de gazage (10) selon la revendication 8 ou 9, **caractérisé en ce qu'**une rainure longitudinale (36) est disposée dans le corps d'introduction (12) au niveau de la zone longitudinale (34) de la membrane (14).
